Europäisches Patentamt

European Patent Office

Office européen des brevets

(11) Publication number: **0 113 209
B1**

# EUROPEAN PATENT SPECIFICATION

(45) Date of publication of patent specification: **16.09.87**

(21) Application number: **83307485.9**

(22) Date of filing: **08.12.83**

(51) Int. Cl.⁴: **E 06 B 3/96**

(54) **A spacer strip for a sealed window unit and a method for manufacture of the strip.**

(30) Priority: **08.12.82 GB 8234951
11.07.83 US 512469
15.07.83 GB 8319264**

(43) Date of publication of application:
**11.07.84 Bulletin 84/28**

(45) Publication of the grant of the patent:
**16.09.87 Bulletin 87/38**

(84) Designated Contracting States:
**AT BE CH DE FR GB IT LI LU NL SE**

(56) References cited:
**EP-A-0 069 558
CA-A- 953 159
DE-A-2 461 706
DE-A-2 617 786**

(73) Proprietor: **Omniglass Ltd.
666 Nairn Avenue
Winnipeg Manitoba R2L 0X5 (CA)**

(72) Inventor: **Davies, Lawrence William
139, Brentford Road
Winnipeg Manitoba, R2M 4M3 (CA)**
Inventor: **Sumerak, Joseph E.
207 N. Hayden Parkway
Hudson Ohio, 44236 (US)**
Inventor: **Martin, Jeff
207 N. Hayden Parkway
Hudson Ohio 44236 (US)**
Inventor: **Church, Kenneth
Box 1186
Gimli Manitoba, R0C 1B0 (CA)**

(74) Representative: **Adkins, Michael et al
Withers & Rogers 4 Dyer's Buildings
Holborn London, EC1N 2JT (GB)**

Courier Press, Leamington Spa, England.

## Description

This invention relates to spacer for the glass panes in a sealed window unit, to a method for manufacturing the spacer and to a sealed window unit including the spacer.

Sealed window units of this type have been known for many years and have become increasingly important and popular as energy conservation and energy efficiency have become more popular. Such a sealed window unit comprises an outer frame or tape supporting the glass panes and a spacer between the glass panes. The spacer is formed in strips which lie along adjacent edges of the panes so as to define a space therebetween and to support the panes in the defined spacing.

To date the most common material which has been commercially used for the spacer in the manufacture of such units has been steel. Steel has been used mainly because it has a co-efficient of expansion similar to that of glass and because this property is the most important in the manufacture of such a unit. It will of course be appreciated that any difference in expansion particularly in climates which have large changes in temperature can have many disastrous consequences, particularly as size of the window increases, including cracking of the glass and at least breaking of the seal between the panes of glass. Other metals such as aluminum are completely unsatisfactory on medium to large windows in that the thermal expansion is very different from that of glass. Similarly many plastics materials such as nylon, vinyl, polythene are available but again these are completely unsatisfactory in view of very different expansion characteristics. To date therefore steel has been the generally accepted material even though this has a number of considerable disadvantages. In particular, the thermal conductivity of steel is considerably higher than that of glass or of the air space between two panes of glass. In a sealed unit heat from within a building tries to escape from a building and the path it takes is through the path of least resistance. In the case of a sealed window unit, the path of least resistance is around the perimeter of the unit where the steel spacer strip is provided. Thus heat is rapidly lost from around the perimeter of the window often causing a ten degrees to twenty degrees farenheit temperature drop at the perimeter of the window relative to the center thereof.

This temperature differential results in differential shrinkage between the center of the glass pane and the perimeter. This can result in a stress crack developing in the glass or can result in the loss of the sealing around the edges of the panes. When the seal breaks down outside air can enter the space between the windows carrying water vapour which is deposited inside the panes causing fogging of the window unit. Approximately five percent of the window units manufactured tend to fail due to such stress cracks, or loss of seal. However it is often thought that the failure is due to shifting of the building rather than to a failure of the window unit itself.

A yet further problem with steel spacer strips is that they are manufactured in certain cut lengths which necessarily cause wastage when cut to specific lengths for use in the window unit. Obviously it is necessary to cut the steel into particular lengths for shipping and handling and of course these lengths cannot be predetermined relative to particular requirements. In addition the finite lengths of the steel strips makes automation of the handling and cutting processes more difficult.

Steel and aluminum spacers of this kind are manufactured by rolling or folding to form a hollow body which is substantially rectangular in cross-section with a slot or interlock along the upper surface between the two folded edges of the steel strip from which the folded body is formed. It is important to maintain the width of the slot as narrow as possible in order to allow the ingress of air from the space between the window panes while preventing the escape of granular desiccant material. In manufacture of a window unit using the spacer, desiccant is added into the interior of the hollow spacer so as to dry out the air remaining between the panes of glass so that no water is condensed onto the inside faces of the glass thus fogging the window unit. Steel which is very unsuitable for extrusion processes can however be readily formed by a folding process into a shape of this type. However folding processes are limited in the type of shape that can be formed.

CA—A—953 159 proposes a spacer made of a non-conductive material such as a plastic material.

It is one object of the invention therefore to provide a spacer for a sealed window unit which overcomes the expansion problems of the spacers used to date.

Accordingly the invention provides a spacer for a sealed window unit comprising an elongate hollow body of substantially rectangular cross-section dimensioned such that the transverse faces have a width sufficient to space two panes of glass in the sealed window unit, one of the transverse faces being apertured along the length thereof so as to allow the ingress of moisture into the hollow body while preventing the escape of a granular desiccant from the hollow body, characterized in that the hollow body is formed by pultrusion from a thermosetting material reinforced by a proportion of elongate continuous glass fibre material oriented longitudinally throughout the length of the body so as to provide for the body a coefficient of thermal expansion substantially equal to that of glass.

According to a further aspect of the invention there is provided a method of manufacturing a spacer for a sealed window unit comprising an elongate hollow body of substantially rectangular cross-section, one of the transverse faces having a slot along the length thereof dimensioned so as to allow the ingress of moisture into the hollow body while preventing the escape of a granular desiccant from the hollow body, the method characterized in the steps of pultruding the spacer from a bath including glass reinforcing fibres and a thermo setting resin through a die, forming a slot in the pultruded part which slot is wider than the slot in the spacer, curing and cooling the thermo setting resin and causing the slot to close during the cooling and curing process.

Further features of the invention reside in the arrangement and portion of bi-directional to uni-directional fibre reinforcement which obtains the differential shrinkage to close the elongate slot in the inner surface. Furthermore, the thermal expansion of the spacer strip can be specifically tailored to that of the glass of the sealed window unit by a suitable choice of resin to fibre content.

In accordance with a yet further feature, a corner member is provided for joining one end of the spacer strip to an adjacent spacer strip at right angles thereto, the corner member comprising a pair of legs arranged at right angles, each of the legs having an outer surface, an inner surface and two sides dimensioned so as to be received within the hollow body, and a pair of projections each provided on one of the corner members and the spacer strip along a respective side at a position adjacent the outer surface whereby the forces between the leg and the spacer strip are effectively confined to the outer surface to avoid opening the slot in the spacer strip. Particularly, each projection can be V-shaped in a cross-sectional plane transverse to the leg for cooperation with a pair of V-shaped grooves arranged to receive the projections in compression fit.

A number of embodiments of the invention will now be described in conjunction with the accompanying drawings in which:

Figure 1 is a cross-sectional view through the die of a pultrusion process showing the initial shape of a spacer strip manufactured by a pultrusion technique;

Figure 2 is a cross-sectional view through a spacer strip ready for use in a sealed window unit;

Figures 3 and 3A are front elevational and plan views respectively of a roll of spacer strip formed by the pultrusion technique provided in a form suitable for transport and handling;

Figure 4 is a schematic illustration of the pultrusion technique for use in manufacturing a spacer strip as shown in Figure 2 and employing a die of the cross-section shown in Figure 1;

Figure 5 is a sketch similar to that of Figure 4 showing a modified pultrusion technique employing squeeze rollers for closing the pultruded cross-section;

Figure 6 is a cross-sectional view through a sealed window unit employing the spacer strip of Figure 2;

Figure 7 is a cross-sectional view through a modified spacer strip incorporating channel sections for supporting the glass panes in a bi-pane arrangement;

Figure 8 is a further modified spacer strip for use in a tri-pane arrangement;

Figure 9 is a view similar to that of Figure 6 showing a modified spacer strip;

Figure 10 is a graph showing the relationship between resin content and coefficient of thermal expansion of the spacer;

Figure 11 is a view similar to that of Figure 6 showing a modified spacer strip including a corner member for connecting the strip to the adjacent strip at right angles thereto; and

Figure 12 is a part cross-sectional view along the lines 12—12 of Figure 11 with one of the spacer strips omitted for clarity.

In the drawings like characters of reference indicate corresponding parts in the different figures.

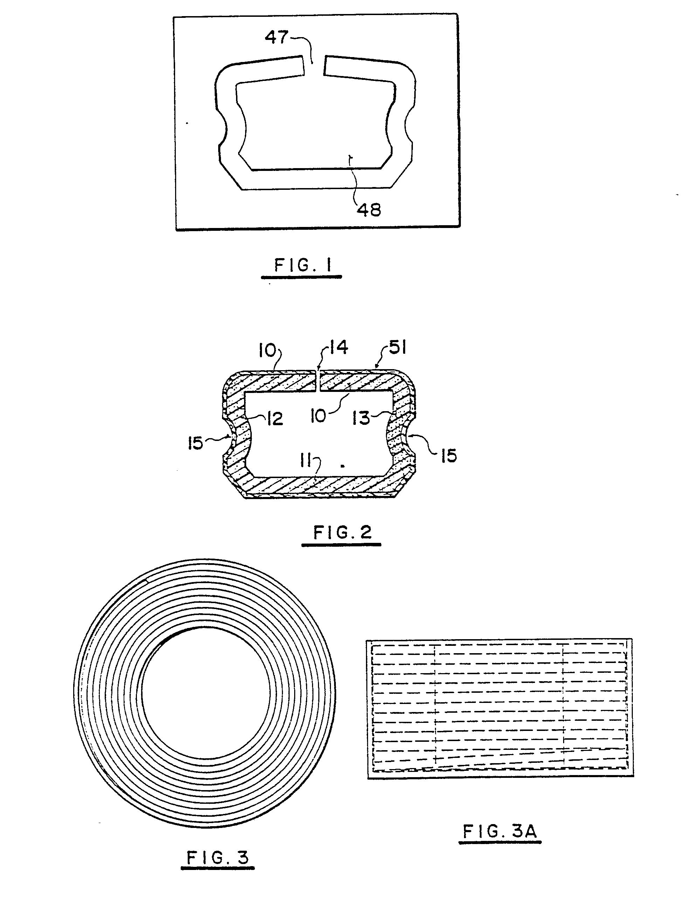

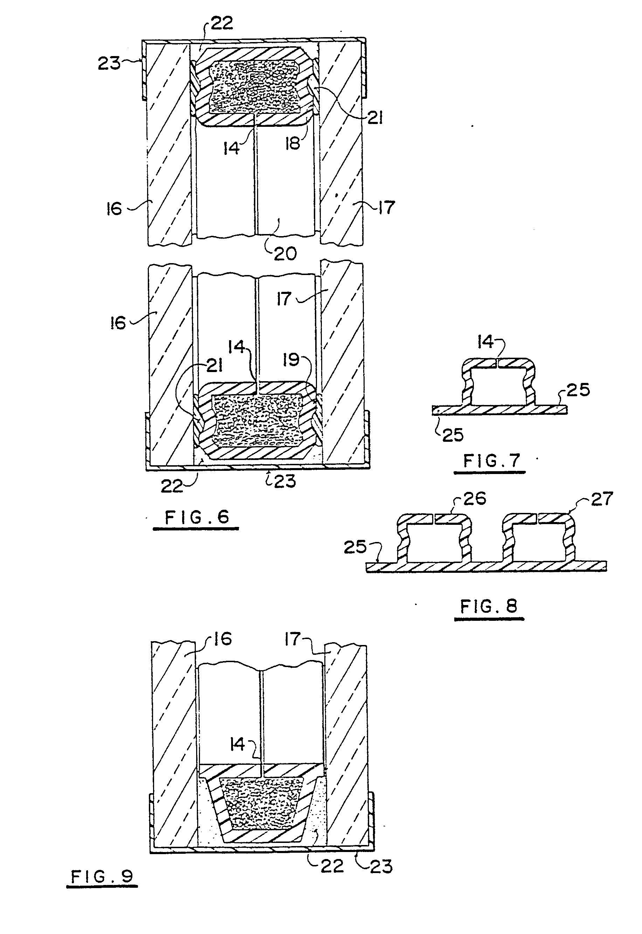

The pultruded spacer is shown in cross-section in figure 2 and in situ in a sealed window unit in Figure 6. It comprises an elongate hollow substantially closed body formed of a glass fibre reinforced pultruded material by method as will be described in more detail hereafter. The body comprises substantially straight upper and lower walls 10 and 11 and side walls 12 and 13. The upper wall 10 includes a slot centrally thereof running along the full length of the body, the slot indicated at 14. Each of the side walls 12, 13 includes a recess or groove 15 running along the full length thereof adjacent to the mid-point there-of. The walls 10 through 13 are joined by smooth curves so as to avoid weakened sections provided by sharp corners.

The body is dimensioned such that the walls 12, 13 are spaced by the desired spacing between two panes of glass which in practice is of the order of 0.5 inches (1.25 centimetres). The height of the walls 12, 13 can be chosen in accordance with requirements but generally is of the order of 0.3 inches (0.8 centimetres) which is sufficient to provide adequate strength and also adequate adhesion to the glass.

The spacer is shown in Figure 6 in a sealed window unit in which the two panes of glass are indicated at 16, 17 respectively and it will be appreciated that a length of the spacer is arranged at each of the four adjacent sides of the panes of glass with two such spacers at the top and bottom indicated at 18, 19 with the third spacer along the rear side as shown in the drawing indicated at 20. The spacer along the front side is not shown in the cross-section.

In manufacture of the sealed window unit with the glass cut to size, the spacers are cut to size and may be mitered or may be square cut with a corner insert used for connection so that they can lie along each of the adjacent sides of the panes of glass recessed slightly inwardly from the edge of the glass. Each of the spacers along its side walls 11, 12, 13 is suitably primed or etched by chemical or mechanical means so as to improve adhesion between the spacer and a sealing or filling agent indicated at 21 and the glass. The sealing agent 21 for example of a butyl material is inserted into the recesses 15 along the side walls 12, 13 so as to ensure that the spacer is sealed to the inside surfaces of the glass panes.

After assembly of the two panes of glass and the spacers with the sealing agent along the edges, the recess defined between the outside surface of the wall 11 of the spacer and the edge of the panes of glass is filled with a further quantity of a sealing agent for example a polysulphide material indicated at 22. Finally a tape 23 is applied to all the edges of the sealed window unit so as to extend slightly around the outer face of the glass panes for handling and to assist in securing the glass panes together and to yet further ensure a seal around the glass panes.

Prior to assembly of the sealed window unit a granular desiccant material is inserted into one or more of the spacer strips. Such granular desiccants are well-known in the trade and act to extract all the moisture from the air trapped between the glass panes so as to prevent any condensation within the glass panes. The slot 14 of the spacer strip as used in the sealed window unit is designed to have a width less than 0.025 inches (0.6 millimetres) and preferably of the order of 0.006 inches (0.15 mm). Such a width is sufficiently narrow to retain the granular desiccant, with the choice of the actual width and the type of desiccant within the normal skill of one in the art. In practice all four spacer strips are filled loosely with the desiccant to ensure that sufficient is provided to extract all the moisture from the space between the panes.

Figures 7 and 8 show modified spacer strips which are basically of the same structure as shown in Figures 2 and 6 but include portions forming flat sections on either side of the basic spacer strip for receiving and seating the glass panes. More specifically Figure 7 shows a two-pane strip including base portions at 25 for receiving the glass panes. Figure 8 shows a three-pane strip includinng two spacer strips 26, 27 and two base sections 25 thus defining three sections for seating the three glass panes.

Figure 9 shows a modified spacer strip in which the shaping of the side walls 12, 13 is altered to replace the channels 15 by a wedge shape so that only one type of sealant, that is polysulphide, can be used.

The pultrusion technique by which the basic spacer strip is manufactured as described in more detail hereinafter lends itself particularly to more complex shapes as shown in Figures 7 and 8 whereas spacer strips manufactured from the previously used steel material cannot readily accommodate the more complex shapes shown.

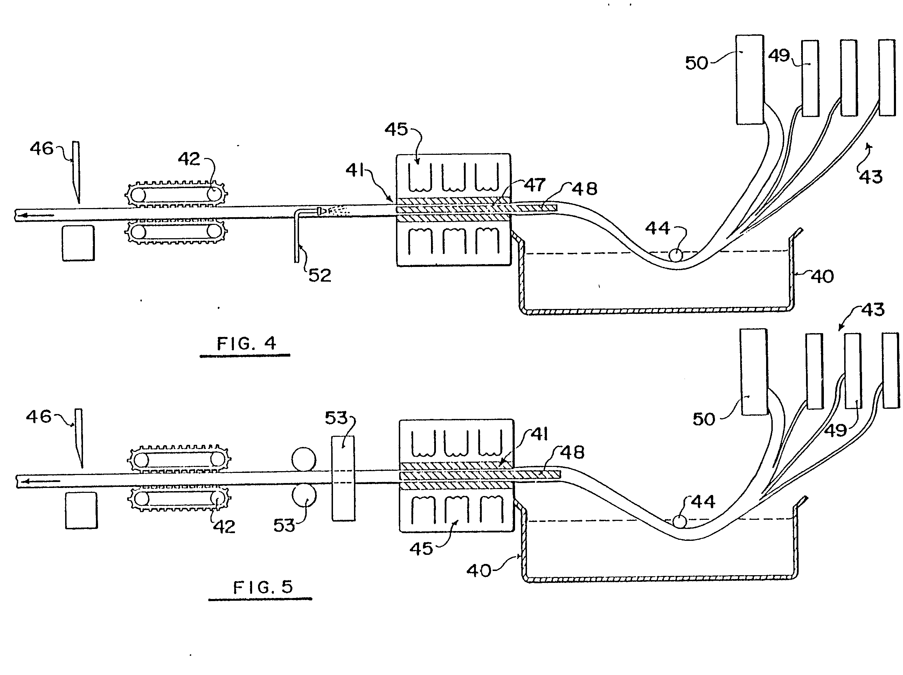

Turning now to the details of manufacture of the spacer strip, the preferred apparatus for the manufacture is shown schematically in Figures 1 and 4 with a modified version in Figure 5. Specifically Figure 4 shows a pultrusion technique comprising a resin bath 40, a die 41, a puller 42, and a glass fibre supply 43. Generally glass fibres from the supply are drawn into the resin bath in which they are emersed by a bar 44 within the bath so as to become fully coated with the resin. The fibres are then drawn into and through the die 41 with any excess resin running back from the entrance to the die into the bath. The die is heated by a plurality of electrical resistance contact heaters schematically indicated at 45 so as to heat the thermo setting resin to a controlled temperature at which it gradually sets as the resin and glass fibres are drawn through the die. The pulling is carried out by the puller 42 which comprises a pair co-operating tracks which grasp the pultruded substantially set strip and draw it from the die toward a cutter 46 and a packing station (not shown) downstream of the cutter.

The die is shown in longitudinal cross-section in Figure 4 and in transverse cross-section in Figure 1. It will be noted that the shape of the die in Figure 1 is substantially the same as the finished item shown in Figure 2 except that the web 47 supporting the mandrel 48 is wider than the slot 14 in the finished item. This increased width is provided to enable the mandrel 48 which shapes the interior of the strip to be supported directly on the die by the web 47. The width of the web 47 is of the order of 0.080 inches (0.203 centimetres) and can lie in the range 0.050 inches to 0.15 inches.

The increased width at the slot 14 in the die is achieved by opening the body by an angle of the order of three degrees at each of the corners. Thus the upstanding wall 12 is in the die three degrees further out than in the finished item and also the wall forming one-half of the upper surface 10 is at an angle of three degrees greater than the finished item relative to the wall 12. The other half of the die is symmetrically arranged. Thus the halves of the upper wall 10 lie at six degrees to a transverse plane. This half-angle which in the preferred example described is three degrees can lie in the range 1 degrees to 6 degrees.

The supply 43 comprises a plurality of spools 49 of glass fibre roving which is an untwisted strip containing a plurality of glass fibres. In addition a single reel of matting is provided at 50. The matting is of a width such that it can substantially extend around the full periphery of the die and can contain the roving strands to the inner areas of the die. Guides, as will be apparent to one skilled in the art but not shown in the drawings are provided so as to guide the roving and the matting so that the matting wraps around the roving prior to the entry into the die and the roving is properly spaced around the die. For this purpose in one example the mandrel 48 extends outwardly from the entry end of the die. The mandrel commences at a square cross-section gradually changing to the required die cross-section as it approaches the entry to the die. In this way by the time the fibres actually enter the die they have been properly oriented by the mandrel so as to be properly spaced in the finished pultruded item. The temperature of the die and the rate of advance of the fibres through the die is chosen and arranged such that the resin substantially completely cures or sets in the die. In this way when the pultruded strip emerges from the die the resin is substantially completely set with possibly a small amount of setting occurring in the first few inches beyond the end of the die. Alternative arrangements may be used for orienting the fibres before entering the die, which do not require the elongated mandrel but use separate guides prior to the die.

The positioning of the fibres in the finished item it shown schematically in Figure 2 where the matting 51 lies around the outside of the finished item and the uni-directional fibres from the roving lie inside the matting. The matting can comprise any bi-directional arrangement of fibres provided by a non-woven random matting from continuous fibre or cut fibres or for example a stitched non-woven matting. Woven matting is not preferred since bias forces can be set up in the weave which can be unsatisfactory. However any two-directional arrangement of glass fibres can be used and the term "matting" is used in this context.

As the strip emerges from the die, the resin is still in the process of cooling and to some extent setting. Thermo-setting resins on cooling and setting tend to contract by a varying amount depending on the particular resin chosen whereas the glass fibres contract very little if at all. As the matting 51 provides glass fibres extending around the periphery of the strip, the outside periphery tends to shrink on cooling and setting. However the inner portions which include only uni-directional fibres along the length of the strip tends to shrink to a greater extent because the resin in between the individual fibres is allowed to contract. In this way a differential shrinkage occurs whereby the inner layers shrink to a greater extent than the outer layers thus pulling in the body particularly at the corners so that the three degrees provided by the die shape is taken up in the differential shrinkage to form the finished item as indicated in Figure 2.

This process can be used not only in the manufacture of spacer strips but for any hollow body which is not completely closed.

For convenience of manufacture paint spraying guns 52 are positioned on both sides and bottom of the strip immediately before the puller 42 so as to coat the side walls with a paint primer. Suitable mechanical etching techniques may be employed as an alternative to the chemical method just described. Downstream of the puller 42 the cutter 46 can be used to cut the strip into convenient lengths for shipping for example twenty to forty feet depending upon requirements.

As an alternative, the use of the matting in the strip allows the strip to flex sufficiently to curve with a radius of curvature of the order of five feet but not less than 3 feet. The minimum radius of curvature is determined by the Follins Formula:

1/2 part thickness ÷ .003 = Minimum hoop radius. This is important if different part heights 12, 13 are employed.

Thus instead of cutting the strip can be rolled onto the interior of a drum of the order of ten feet diameter shown schematically in Figures 3 and 3A so as to form a package of the strip of the order of two thousand feet or more in length. The diameter of ten feet can be modified in practice but is convenient in that it provides a transportable package of the strip without deforming the strip sufficiently to form permanent kinks which would be unacceptable in the manufacture of the sealed window unit. The supply of the strip in continuous length is advantageous for automated cutting and mitering equipment in the manufacture of the sealed window units. The packaging of the strip on the interior of a drum is used in view of the high forces stored by the flexing which could be dangerous if suddenly released by cutting straps on an exteriorly rolled package.

In Figure 5 is shown a slightly modified process from that of Figure 4 in which the matting 51 is omitted from the exterior of the strip so the strip is formed wholly of roving or possibly from spun roving which includes some bi-directional strength. Alternatively matting can be placed randomly within the part to avoid the differential shrinkage described above. In this modification the closing of the strip to the final shape is accommodated by rollers 53 which squeeze the strip and complete the final curing of the resin. In this example the temperature of the die may be decreased slightly to reduce the amount of setting occurring in the die to say ninety-five percent of the completely set condition. The rollers 53 are positioned downstream of the die and upstream of the puller 42. In order to achieve the necessary width of the slot as previously stated, the rollers 53 can in fact comprise a plurality of pairs of rollers arranged immediately after the die and spaced every 4 inches for up to 10 feet from the die. Also the rollers can be arranged to gradually reduce in spacing from the die down to the last pair from the width of the part including the mandrel support down to the spacing of the part with the required slot width.

The amount of fibres used lies in the range twenty-five to eightly percent by weight of the total finished body. In the embodiment employing matting on the outer surface, the percentage of bi-directional fibres lies in the range five to forty percent of the total part. The positioning of the matting is preferably directly on the outer surface of the body since this can be most easily accommodated and arranged by suitable guides. However the differential shrinkage can be obtained provided the bi-directional fibres lie closer to the outer surface than the inner surface.

Protection against ultra-violet light degradation of the spacers can be provided in conventional manner for example by the introduction of titanium dioxide which also provides a pigment for the spacer.

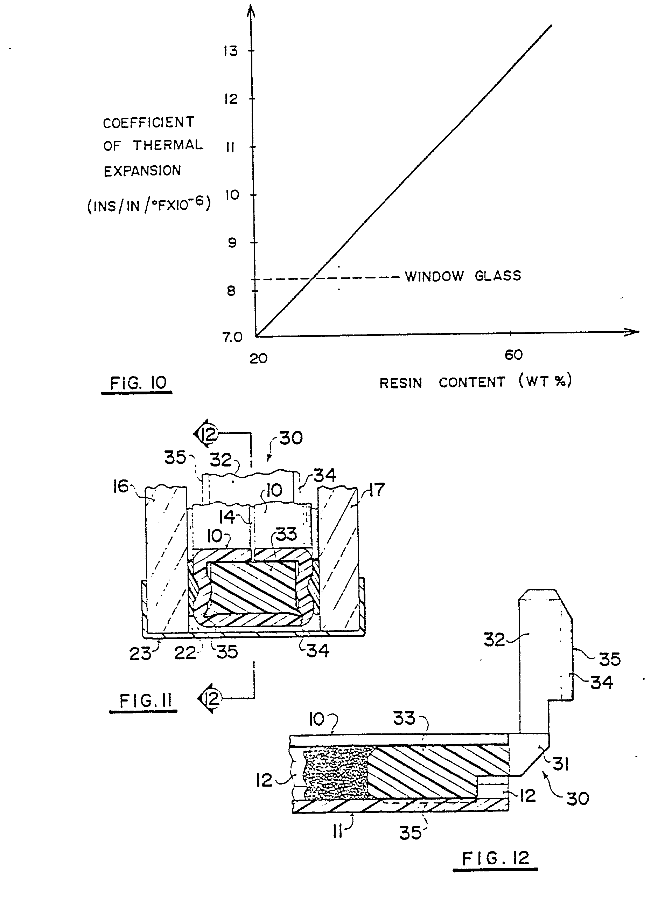

Figure 10 is a graph showing the relationship between the proportion of solids content in the spacer to the resin content and the coefficient of thermal expansion of the finished part. The present inventors have determined that a substantially linear relationship exists between these characteristics by which the exact coefficient of thermal expansion of the spacer can be tailored to the required figure to accurately or substantially match the coefficient of the window glass concerned. It will be appreciated that while window glass has a coefficient of expansion around 8.2, this can vary in dependence upon the type of glass used and particularly when additives are included in the glass for example to provide an increased degree of reflection.

Thus armed with knowledge of the type of glass for which the spacer is intended, the coefficient of thermal expansion of the spacer can be specifically chosen to match that of the glass. The graph of Figure 10 provides guidance on how this tailoring should be achieved. It will be appreciated that the resin, as explained previously, has a greater coefficient of thermal expansion than the glass and hence the proportion of resin to glass has an effect on the coefficient of the finished part.

The solids content in the finished part can comprise either wholly glass fibres or can comprise various fillers known in the art. The fillers are either added specifically as a separate filler to the resin or comprise a part of the resin as thermo plastic solids in the resin. The amount of resin therefore can be decreased by adding fillers while retaining the proportion of glass constant. As an alternative the proportion of resin can be increased by increasing the proportion of bi-directional to uni-directional fibres. The larger amount of bi-directional fibres that are present provides increased spaces between the fibres for acceptance of resin. Thus the man skilled in art can vary the proportion of bi-directional to uni-directional fibres and also can vary the filler content of the finished part to specifically tailor the solids to resin proportion to obtain the required coefficient of thermal expansion.

In one example containing 60% resin and 40% solids the coefficient of thermal expansion was 13 ins/in degree $F \times 10^{-6}$ (23. 4 centimeters/centimeter/degree $C \times 10^{-6}$). In a second example employing 80% glass and 20% resin content the coefficient of thermal expansion was 7 ins/in degree $F \times 10^{-6}$. The percentages are stated by weight.

Turning now to Figures 11 and 12 there is shown a modified spacer strip in conjunction with a corner member of a particular construction which provides a firm connection with the spacer strip while avoiding any tendency to open the spacer strip thus causing deformation. The corner member is indicated generally at 30 and comprises a central boss portion 31 with a pair of legs 32, 33 extending at right angles from the boss portion 31. The legs are of a cross section shown in Figure 11 comprising a substantially rectangular cross section with sides, an inner surface and an outer surface, and a pair of lateral projections 34, 35 at or adjacent the outer surface thereof. Thus the projections 34, 35 project outwardly from the side walls at a position remote from the surface adjacent the slot 14.

The spacer strip is shown in cross section in Figure 11 and it will be noted particularly from Figure 11 that the lateral projections 34, 35 are remote from the upper wall 10 of the spacer strip and hence remote from the slot 14. The lateral projections are shaped so as to conform to the inner surface of the spacer strip adjacent the junction between the lower wall 11 and the side walls 12, 13 so as to form a compression fit between the lateral projections and the junction of the walls. The sides and upper surface of the leg are arranged as a sliding fit within the spacer strip so as to avoid applying forces to the walls of the spacer strip apart from the compression forces provided by the lateral projections. In this way, any opening of the strip is avoided and substantially all forces applied to the strip by the leg are taken up within the wall 11 which, relative to the flexing about the slot 14, is substantially inelastic.

It will be noted from Figure 11 that the spacer strip is modified relative to the spacer strip shown in Figure 1 by the provision of a sharp or V-shaped corner at the junction between the walls 12, 13 and the wall 11. The radius of the apex can be in the range 0.01 inch to 0.015 inch. This sharp junction assists in applying the compression forces to the wall 11 and reducing the flexing of the walls 12, 13 but it will be apparent that other shapes in this area could be employed provided the forces are limited substantially to the wall 11 and avoid substantial flexing of the walls 12, 13. As shown the apex of the V-shape turns slightly downwardly from the bottom wall of the spacer. It is possible for the apex however to be slightly above the bottom wall with a curved surface joining the apex to the bottom wall.

As shown in Figure 12, the spacer strip is pushed onto the leg until is engages the boss portion 31. The dimensions of the boss portion are such that it just receives the outside surface of the spacer strip so that a second spacer strip pushed onto the other leg 32 just touches the inner or upper wall 10 of the first spacer strip.

The boss portion does not extend outwardly to the outer surface or wall so as to provide a substantial area around the corner for receiving sealant which can enter into the spacer strip at the back of the corner member thus when set, fixing the corner member in place relative to the spacer strip and firmly locating the panes of glass relative to the spacer strip and the corner member.

The corner member can be formed of any suitable material which can be slightly compressed, for example, nylon or vinyl so as to provide the necessary compression fit between the lateral projections thereof and the inner surface of the spacer strip.

It will be appreciated therefore the present invention provides a number of specific advantages relative to the prior art. Firstly the substantially decreased thermal conductivity of the spacer strip can improve the R-value of a sealed triple-paned window unit by 0.203 hr sq. ft. °F/Btu. This is an improvement of 6.2% over a window with conventional steel pane spacer. This R-value is a characteristic of the entire window construction and hence of course will vary for different types of windows. In some examples, use of the spacer strip has obtained values of 15—30% warmer temperatures at the periphery of the window.

Secondly the tailoring of the coefficient of thermal expansion of the spacer strip to that of the glass enables the manufacture of large sealed window units with a decreased risk of failure due to thermal stress.

Since various modifications can be made in my invention as hereinabove described, and many apparently widely different embodiments of same made within the spirit and scope of the claims without departing from such spirit and scope, it is intended that all matter contained in the accompanying specification shall be interpreted as illustrative only and not in a limiting sense.

**Claims**

1. A spacer for a sealed window unit comprising an elongate hollow body (10) of substantially rectangular cross-section dimensioned such that the transverse faces (10, 11) have a width sufficient to space two panes of glass (16, 17) in the sealed window unit, one (10) of the transverse faces being apertured along the length thereof so as to allow the ingress of moisture into the hollow body while preventing the escape of a granular desiccant from the hollow body, characterized in that the hollow body is formed by pultrusion from a thermosetting material reinforced by a proportion of elongate continuous glass fibre material oriented longitudinally throughout the length of the body so as to provide for the body a coefficient of thermal expansion substantially equal to that of glass.

2. A spacer according to claim 1 wherein said one of the transverse faces is apertured by a continuous slot (14) along the length thereof, said slot having been formed in said pultrusion by a support web (47) of a mandrel (48) and having been reduced in width subsequent to said pultrusion.

3. A spacer according to Claim 1 or 2 wherein the hollow body (10) is reinforced with twenty-five to eighty percent by weight of glass fibres.

4. A spacer according to any one of Claims 1 to 3 wherein the fibre content comprises 60% to 95% uni-directional reinforcing fibrous material and 5% to 40% bi-directional reinforcing fibrous material.

5. A spacer according to any preceding Claim including a proportion of uni-directional reinforcing fibrous material and a proportion of bi-directional fibrous material wherein the bi-directional fibrous material comprises a non-woven matting (51).

6. A spacer according to any preceding Claim including a proportion of uni-directional reinforcing fibrous material and a proportion of bi-directional fibrous material wherein there are more bi-directional fibres provided adjacent the outer surface of the hollow body (10) than adjacent the inner surface thereof.

7. A spacer according to any preceding Claim of sufficient flexibility to allow the hollow body (10) to be curved to a radius of curvature less than five feet.

8. A spacer strip according to any preceding Claim including a corner member (30) for joining one end of the spacer strip to an adjacent spacer strip at right angles thereto, the corner member comprising a pair of legs (32, 33) arranged at right angles, each of the legs having an outer surface, an inner surface and two sides all dimensioned so as to be received within the hollow body, and a pair of projections (34, 35) each provided on one of the corner members and the spacer strip along a respective side at a position adjacent the outer surface whereby the forces between the leg and the spacer strip are effectively confined to the outer surface.

9. A spacer strip according to Claim 8, wherein each projection (34, 35) is V-shaped in a cross-sectional plane transverse to the leg and wherein the spacer strip includes a pair of V-shaped grooves arranged to receive the projections in a compression fit.

10. A sealed window unit comprising four spacers each according to any preceding Claim and two co-extensive panes of glass (16, 17) arranged in spaced parallel relationship each spacer being arranged between the panes along two adjacent edges of the panes, wherein the coefficient of thermal expansion of the spacers is arranged to be the same as that of the glass panes.

11. A sealed window unit according to Claim 10 wherein the coefficient of thermal expansion of the spacers has been arranged by selecting specific proportions of fibre content to resin content of the spacers.

12. A method of manufacturing a spacer of the type claimed in claims 1 to 9, comprising an elongate hollow body (10) of substantially rectangular cross-section, one of the transverse faces having a slot (14) along the length thereof dimensioned so as to allow the ingress of moisture into the hollow body while preventing the escape of a granular desiccant from the hollow body, the method characterized in the steps of pultruding the spacer from a bath (40) including glass reinforcing fibres and a thermo setting resin through a die (41), forming a slot (47) in the pultruded part which slot is wider than the slot (14) in the spacer, curing and cooling the thermo setting resin and causing the slot (47) to close during the cooling and curing process.

13. A method according to Claim 12 including contacting the edges of the spacer with a plurality of pairs of rollers (53) spaced along the length of the spacer downstream of the die (41), the spacing between the pairs gradually decreasing in a direction downstream.

## Patentansprüche

1. Distanzhalter für eine luftdicht verschlossene Fenstereinheit aus einem länglichen Hohlkörper (10) mit annähernd rechtwinkligem Querschnitt, so ausgebildet, daß die querliegenden Flächen (10, 11) eine ausreichende Breite aufweisen, um zwei Glasscheiben (16, 17) der luftdicht verschlossenen Fenstereinheit aufzunehmen, wobei eine der querliegenden Flächen (10) längsseitig durchlöchert ist, um das Eindringen von Wasserdampf in den Hohlkörper zu ermöglichen und das Ausrieseln eines körnigen Exsiccatorfüllmittels aus dem Hohlkörper verhindert wird, dadurch gekennzeichnet, daß der Hohlkörper durch Pultrusion aus einem wärmehärtbarem Material hergestellt ist, das durch die Zugabe von in Längsrichtung über die Länge des Körpers verlaufenden durchgehenden Glasfibern verstärkt ist, wobei erreicht wird, daß der Körper einen Wärmeausdehnungskoeffizient aufweist, der dem von Glas in etwa entspricht.

2. Distanzhalter nach Anspruch 1, dadurch gekennzeichnet, daß eine der querliegenden Flächen durch einen über ihre Länge verlaufenden Schlitz geöffnet ist, der bei der Pultrusion durch die Hilfsschneide eines Dornes gebildet wird und nach der Pultrusion in seiner Weite verringert wird.

3. Distanzhalter nach Anspruch 1 und 2, dadurch gekennzeichnet, daß der Hohlkörper (10) mit Glasfibermaterial, dessen Gewichtsanteil zwischen 25% und 80% liegt, verstärkt ist.

4. Distanzhalter nach Anspruch 1 bis 3, dadurch gekennzeichnet, daß der Gehalt an einseitig verstärkendem Fibermaterial zwischen 60% und 95% und der Gehalt an zweiseitig verstärkendem Fibermaterial zwischen 5% und 40% liegt.

5. Distanzhalter nach einem der vorherigen Ansprüche, dadurch gekennzeichnet, daß er teilweise aus einseitig verstärkendem Fibermaterial und teilweise aus zweiseitig verstärkendem Fibermaterial besteht, wobei das zweiseitig verstärkende Fibermaterial einen nicht gewebten Belag (51) aufweist.

6. Distanzhalter nach einem der vorherigen Ansprüche, dadurch gekennzeichnet, daß er teilweise aus einseitig verstärkendem Fibermaterial und teilweise aus zweiseitig verstärkendem Fibermaterial besteht, wobei sich an der äußeren Oberfläche des Hohlkörpers (10) mehr zweiseitig verstärkendes Fibermaterial als an seiner inneren Oberfläche befindet.

7. Distanzhalter nach einem der vorherigen Ansprüche, dadurch gekennzeichnet, daß er eine hinreichende Dehnbarkeit aufweist, um die Biegung des Hohlkörpers mit einem Krümmungsradius von weniger als 5 Fuß (1,524 m) zu ermöglichen.

8. Distanzhalter nach einem der vorherigen Ansprüche, dadurch gekennzeichnet, daß er ein Eckteil (30) zum rechtwinkligen Verbinden eines Endes des Distanzhalterstreifens mit einem benachbarten aufweist, wobei das Eckteil zwei rechtwinklig angeordnete Stege hat, die eine äußere Fläche, eine innere Fläche und zwei Seiten besitzen, und so ausgebildet ist, daß es innerhalb des Hohlkörpers angebracht werden kann und zwei Nasen (34, 35) hat, die an dem Eckteil und dem Distanzhalterstreifen längs der betreffenden Seite neben der äußeren Fläche sitzen, wodurch Spannungen zwischen dem Steg und dem Distanzhalterstreifen ausschließlich auf die äußere Fläche beschränkt sind.

9. Distanzhalterstreifen nach Anspruch 8, dadurch gekennzeichnet, daß jede Nase (34, 35) einen V-förmigen Querschnitt quer zum Steg hat, wobei der Distanzhalterstreifen zwei V-förmige Aussparungen aufweist, die die Nasen in einer Druckpassung aufnehmen.

10. Luftdicht abgeschlossene Fenstereinheit, bestehend aus vier Distanzhaltern nach einem der vorherigen Ansprüche und zwei parallel angeordneten flächigen Glasscheiben (16, 17), dadurch gekennzeichnet, daß jeder Abstandshalter zwischen den Scheiben entlang zweier benachbarter Ecken der Scheiben angeordnet ist und der Wärmeausdehnungskoeffizient der Distanzhalter dem der Glasscheiben entspricht.

11. Luftdicht abgeschlossene Fenstereinheit nach Anspruch 10, dadurch gekennzeichnet, daß die Größe des Wärmeausdehnungskoeffizienten des Distanzhalters durch die Festlegung einer speziellen Fiber-Kunststoffmischung des Distanzhalters eingestellt wird.

12. Verfahren zur Herstellung eines Distanzhalters nach Anspruch 1 bis 9 aus einem länglichen Hohlkörper (10) mit annähernd rechtwinkligem Querschnitt, wobei eine der Querflächen einen längsseitig verlaufenden Schlitz (14) aufweist, der so ausgebildet ist, daß er das Eindringen von Wasserdampf in den Hohlkörper ermöglicht und das Ausrieseln eines körnigen Exsiccatorfüllmittels aus dem Hohlkörper vermeidet, dadurch gekennzeichnet, daß der Distanzhalter aus einem Bad (40), das verstärkendes Glasfiber und einen wärmehärtenden Kunststoff enthält, durch eine Matritze (41) pultrudiert wird, wobei ein Schlitz (47) in dem pultrudierten Teil ausgebildet wird, der breiter ist als der Schlitz (14) im Abstandshalter, daß er gehärtet und abgekühlt wird, wobei der wärmehärtbare Kunststoff den Schlitz (47) während des Härtens und Abkühlens schließt.

13. Verfahren nach Anspruch 12, dadurch gekennzeichnet, daß eine Vielzahl von Rollenpaaren (53) längs des Distanzhalters unterhalb der Matritze (41) angeordnet sind, die die Kanten des Distanzhalters berühren, wobei der Abstand zwischen den Rollenpaaren in Produktionsrichtung abnimmt.

## Revendications

1. Bande d'écartement pour élément de fenêtre, comprenant un corps creux allongé (10) de section sensiblement rectangulaire, dimensionné de façon que les faces transversales (10), 11) présentent une largeur suffisante pour espacer deux carreaux de vitre (16, 17) de l'élément de fenêtre étanche, l'une (10) des faces transversales étant percée d'une ouverture suivant sa longueur, de manière à permettre l'entrée d'humidité dans le corps creux tout en empêchant qu'un produit désiccant granulé s'échappe du corps creux, bande d'écartement caractérisée en ce que le corps creux est constitué par une mousse d'un matériau thermodurcissable renforcé par une certaine proportion de matériau en fibres de verre allongées continue orientées longitudinalement sur toute la longueur du corps, de manière à donner à ce corps un coefficient de dilatation thermique sensiblement égal à celui du verre.

2. Bande d'écartement selon la revendication 1, caractérisée en ce que l'une des faces transversales est percée d'une fente continue (14) suivant sa longueur, cette fente ayant été formée dans la mousse par l'âme de support (47) d'un mandrin (48), et sa largeur ayant été réduite après la prise de la mousse.

3. Bande d'écartement selon l'une quelconque des revendications 1 et 2, caractérisée en ce que le corps creux (10) est renforcé par 25% à 80% en poids de fibres de verre.

4. Bande d'écartement selon l'une quelconque des revendications 1 à 3, caractérisée en ce que la teneur en fibres est constituée de 60% à 95% d'un matériau de renforcement fibreux unidirectionnel, et de 5% à 40% d'un matériau de renforcement fibreux bidirectionnel.

5. Bande d'écartement selon l'une quelconque des revendications précédentes, comprenant une certaine proportion de matériau de renforcement fibreux unidirectionnel et une certaine proportion de matériau de renforcement fibreux bidirectionnel, caractérisée en ce que le matériau fibreux bidirectionnel est constitué par un enchevêtrement non tissé (51).

6. Bande d'écartement selon l'une quelconque des revendications précédentes, comprenant une certaine proportion de matériau de renforcement fibreux unidirectionnel et une certaine proportion de matériau de renforcement fibreux bidirectionnel caractérisée en ce qu'il existe une plus grande quantité de fibres bidirectionnelles au voisinage de la surface extérieure du corps creux (10) qu'au voisinage de la surface intérieure de celui-ci.

7. Bande d'écartement selon l'une quelconque des revendications précédentes, caractérisée en ce qu'elle présente une flexibilité suffisante pour permettre au corps creux (10) de se courber suivant un rayon de courbure inférieur à 1,52 mètre.

8. Bande d'écartement selon l'une quelconque des revendications précédentes, caractérisée en ce qu'elle comprend un élément de coin (30) destiné à relier une extrémité de la bande d'écartement à une bande d'écartement adjacente formant un angle droit par rapport à celle-ci, l'élément de coin comprenant une paire de pattes (32, 33) disposées à angle droit, chacune des pattes comportant une surface extérieure, une surface intérieure et deux côtés, tous dimensionnés de manière à venir se loger dans le corps creux, et deux saillies (34, 35) formées chacune sur l'un des éléments de coins et sur la bande d'écartement le long d'un côté correspondant, dans une position voisine de la surface extérieure, ce qui permet ainsi de limiter effectivement à la surface extérieure les forces produites entre la patte et la bande d'écartement.

9. Bande d'écartement selon la revendication 8, caractérisée en ce que chaque saillie (34, 35) est en forme de V dans un plan de section transversale par rapport à la patte, et en ce que la bande d'écartement comprend une paire de rainures en forme de V disposées de manière à recevoir les saillies dans un emboîtement en compression.

10. Elément de fenêtre étanche comprenant quatre pièces ou bandes d'écartement selon l'une quelconque des revendications précédentes, et deux carreaux de vitre de même taille (16, 17) disposés parallèlement, chaque pièce d'écartement étant placée entre les carreaux de vitre le long de deux bords adjacents de ceux-ci, élément de fenêtre caractérisé en ce que le coefficient de dilatation thermique des pièces d'écartement est choisi de manière à être le même que celui des carreaux de vitre.

11. Elément de fenêtre étanche selon la revendication 10, caractérisé en ce que le coefficient de dilatation thermique des pièces d'écartement a été déterminé en choisissant des proportions spécifiques entre la teneur en fibres et la teneur en résine de ces pièces d'écartement.

12. Procédé de fabrication d'une bande ou pièce d'écartement du type revendiqué dans les revendications 1 à 9, comprenant un corps creux allongé (10) de section sensiblement rectangulaire, l'une des faces transversales comportant, suivant sa longueur, une fente (14) dimensionnée pour permettre l'entrée d'humidité dans le corps creux tout en empêchant qu'un produit désiccant granulé s'échappe du corps creux, procédé caractérisé en ce qu'il comprend les différentes étapes consistant à former la pièce d'écartement en mousse à partir d'un bain (40) comprenant des fibres de renforcement en verre et une résine thermodurcissable dans une matrice (41), à former dans la partie en mousse une fente (47) plus large que la fente (14) dans la pièce d'écartement, à faire durcir et refroidit la résine thermodurcissable, et à produire la fermeture de la fente (47) pendant le processus de refroidissement et de durcissement.

13. Procédé selon la revendication 12, caractérisé en ce qu'il comprend l'étape consistant à amener les bords de la pièce ou bande d'écartement en contact avec un certain nombre de paires de rouleaux (53) espacés suivant la longueur de la pièce d'écartement, en aval de la matrice (41), l'espacement entre les paires de rouleaux diminuant progressivement en direction de l'aval.

0 113 209

FIG. 1

FIG. 2

FIG. 3

FIG. 3A

1

FIG. 4

FIG. 5

FIG.6

FIG.7

FIG.8

FIG.9

COEFFICIENT
OF THERMAL
EXPANSION

$(INS/IN/°FX10^{-6})$

WINDOW GLASS

RESIN CONTENT (WT %)

FIG. 10

FIG. 11

FIG. 12